# EUROPÄISCHE PATENTSCHRIFT

(11) **EP 0 826 581 B1**
(45) Veröffentlichungstag und Bekanntmachung des Hinweises auf die Patenterteilung: **26.04.2000**
(21) Anmeldenummer: 97113805.2
(22) Anmeldetag: 09.08.1997
(51) Int. Cl.: B62D 59/04, E02F 9/00, B60P 3/06

(54) **Lenkbare Lafette zur Aufnahme eines Raupenkettenfahrzeuges**
Steerable trailer for receiving an track-type excavator
Véhicule orientable pour le transport d'un excavateur à chenilles

(30) Priorität: 27.08.1996 DE 19634585
(43) Veröffentlichungstag der Anmeldung: 04.03.1998
(73) Patentinhaber: Schuster, Burkhard, 65795 Hattersheim (DE)
(72) Erfinder: Schuster, Burkhard, 65795 Hattersheim (DE)
(74) Vertreter: Quermann, Helmut, Dipl.-Ing.

(56) Entgegenhaltungen:
- FR-A- 1 303 469
- FR-A- 2 380 177
- GB-A- 2 129 384
- US-A- 2 309 198

## Beschreibung

Die Erfindung betrifft eine lenkbare Lafette mit Rädern zur Aufnahme eines Raupenkettenfahrzeuges, wobei das Antriebssystem der Ketten des Raupenkettenfahrzeuges mit einer Antriebsachse der Lafette verbindbar ist, das Raupenkettenfahrzeug ein Hydrauliksystem aufweist, das mit der hydraulisch antreibbaren Antriebsachse der Lafette und einem hydraulischen Stellglied der Lenkung der Lafette koppelbar ist, wobei der Fahrantrieb der Lafette durch Umstecken eines Steuerkreises einer oder mehrerer hydraulischer Fahrmotoren des Raupenkettenfahrzeuges auf einen oder mehrere hydraulische Fahrmotoren der Lafette bewerkstelligt wird, und die Lenkung der Lafette durch Umstecken eines hydraulischen Steuerkreises des Raupenkettenfahrzeuges auf das hydraulische Stellglied der Lenkung erfolgt.

Es sind verfahrbare Baumaschinen bekannt, die für den Straßenverkehr nicht zugelassen sind und demzufolge mittels einer Lafette, beispielsweise eines Tiefladers, von einem zum anderen Einsatzort verbracht werden müssen. Dies ist sowohl mit hohem personellen, als auch mit hohen maschinellen Aufwand verbunden. So werden in aller Regel große Tieflader eingesetzt, die mittels eines Lastkraftwagens gezogen werden, für den zudem ein Fahrer abgestellt werden muß.

Bei den zu transportierenden verfahrbaren Baumaschinen handelt es sich oftmals um sogenannte Raupenkompaktbagger, wie sie beispielsweise von der Firma Kobota GmbH, Rodgau, unter der Typenbezeichnung KX 61 vertrieben werden. Ein solcher Bagger besitzt einen Dieselmotor, der Hydraulikpumpen antreibt. Über diverse Steuerkreise des Hydrauliksystems können in das Fahrgestell integrierte Fahrmotore der beiden Ketten des Raumpenkompaktbaggers, ein Stellzylinder eines Planierschildes, ein Schwenkwerk mit darauf befindlicher Kabine und ein am Schwenkwerk befestigtem Arm mit Baggerschaufel sowie gegebenenfalls am Baggerarm befestigte Zusatzeinrichtungen hydraulisch beaufschlagt werden. Die Fahrgeschwindigkeit eines solchen Baggers ist vergleichsweise gering, sie beträgt in aller Regel zwischen 2 und 4 km/h.

Eine lenkbare Lafette zur Aufnahme eines Raupenkettenfahrzeuges ist aus der FR 1 303 469 bekannt. Dort ist das Antriebssystem der Ketten des Raupenkettenfahrzeuges mechanisch mit einer Antriebsachse der Lafette verbunden und es erfolgt die Lenkung der Lafette mechanisch von dem Raupenkettenfahrzeug aus. Das Raupenkettenfahrzeug ist als Traktor (landwirtschaftliches Zugfahrzeug) ausgeführt. Die Lafette dient ausschließlich dem Transport des Traktors.

Aus der DE 296 01 927 U1 ist eine Raupenkettenlafette bekannt, die der Aufnahme eines hydraulisch betriebenen Radbaggers dient. Dieser weist ein Fahrgestell mit zwei Radachsen, ein Schwenkwerk mit darauf befindlicher Kabine und einen am Schwenkwerk befestigten Arm mit Baggerschaufel auf. Der Radbagger auf der Plattform der Raupenkettenlafette ist mit dieser zu einer Baumaschinen-Einheit verbindbar. Die Antriebe der Raupenketten sind gesondert zugeordnete Hydraulikmotoren, die mit der Hydraulikanlage des Radbaggers koppelbar sind. Nach Fixierung des sonst unveränderten Radbaggers auf der Plattform der Raupenkettenlafette und Ankopplung der Antriebe kann die Radbagger-Baumaschine mit dem Raupenlaufwerk auch unzugängliches Gelände befahren. Die Raupenkettenlafette ist für den Straßenbetrieb nicht geeignet und es ist bei einem serienmäßigen Radbagger mit einem Steuerkreis, der durch die Drehdurchführung geführt wird, nicht möglich, die beiden Raupenketten, zwecks Lenkung der Raupenkettenlafette, unabhängig voneinander anzutreiben.

Aus der GB-A-2 129 384 ist eine lenkbare Lafette mit Rädern zur Aufnahme eines Raupenkettenfahrzeuges, gemäß den eingangs genannten Merkmalen bekannt. Bei diesem Raupenkettenfahrzeug handelt es sich um ein recht großes Fahrzeug, wie ein Bagger, Bulldozer oder dergleichen. Bei auf der Lafette abgestelltem Raupenkettenfahrzeug ist kein Arbeiten mit dem Raupenkettenfahrzeug möglich. Ist das Raupenkettenfahrzeug auf der Lafette abgestellt, soll vom Raupenkettenfahrzeug ausschließlich die Fahr-/Lenkfunktion des Transportfahrzeuges bedient werden. Dies ergibt sich ohne weiteres aus der Ansteuerung der Aggregate der Lafette. Die Versorgungsleitungen, die das Hydrauliksystem des Raupenkettenfahrzeuges mit dem der Lafette verbinden, sind außerhalb des Raupenkettenfahrzeuges geführt, so daß keine Schwenkbewegung des Raupenkettenfahrzeuges möglich ist, ohne daß die extern geführten Leitungen gequetscht werden oder gar abreißen.

Es ist Aufgabe der vorliegenden Erfindung, eine lenkbare Lafette mit Rädern zur Aufnahme eines Raupenkettenfahrzeuges, gemäß der eingangs genannten Art, so weiter zu bilden, daß mit dieser ein eigenständig für den Straßenverkehr nicht zugelassenes Raupenkettenfahrzeug auf dem Straßenweg unmittelbar durch den mit dem Raupenkettenfahrzeug Arbeitenden von einem zum anderen Einsatzort verbracht werden kann, sowie das Raupenkettenfahrzeug auf der Lafette in den Arbeitsfunktionen bedient werden kann.

Gelöst wird die Aufgabe bei einer lenkbaren Lafette mit Rädern zur Aufnahme eines Raupenkettenfahrzeuges, der eingangs genannten Art, dadurch, daß das Raupenkettenfahrzeug als Raupenkompaktbagger mit Planierschild ausgebildet ist und die Lenkung der Lafette durch Umstecken des hydraulischen Steuerkreises des Planierschildes auf das hydraulische Stellglied der Lenkung erfolgt, wobei der hydraulische Steuerkreis des Fahrantriebes zwei Steuerkreisbereiche aufweist, mit denen zwei Fahrmotoren steuerbar sind, die dem unabhängigen Antrieb zweier Ketten des Raupenkompaktbaggers dienen, wobei im Fahrzustand der Lafette die beiden Fahrmotoren entkoppelt und die zusammengeführten Steuerkreisbereiche mit dem Fahrmotor der Lafette gekoppelt sind.

Es ist damit vorgesehen, den hydraulischen Antrieb zum Verfahren des Raupenkompaktbaggers zum Verfahren der Lafette zu benutzen. Die Lafette muß nur mit den notwendigen Antriebs- und Stellelementen versehen sein, die zum Antreiben (worunter auch das Bremsen zu verstehen ist) und Lenken der Lafette erforderlich sind. Diese hydraulischen Elemente der Lafette werden mit den Steuerkreisen des Hydrauliksystems des Raupenkompaktbaggers gekoppelt, so daß der üblicherweise den Raupenkompaktbagger Bedienende nunmehr die Lafette verfahren kann und vom Bagger aus die Lafette steuert. Die Lafette selbst ist mit den für den Einsatz im Straßenverkehr notwendigen Leuchtmitteln, d.h. Brems-, Rück-, Blinkleuchten, Scheinwerfern usw. versehen, wobei über eine elektrische Steckverbindung die Verbindung zwischen den Leuchtmitteln der Lafette und dem stromerzeugenden Aggregat des Baggers erfolgt.

Wesentlich ist bei der vorliegenden Erfindung, daß infolge der besonderen Ansteuerung des Fahrantriebes der Lafette statt des Fahrantriebes des Raupenkompaktbaggers und der Lenkung der Lafette statt der Ansteurung des Planierschildes des Raupenkompaktbaggers ein Arbeiten mit dem Raupenkompaktbagger auf der Lafette möglich ist. Hierbei kann der stationär auf der Lafette befindliche Bagger mit der Lafette verfahren werden und es ist die Funktion des Planierschildes des Baggers durch die Lenkfunktion des Baggers ersetzt. Es kann damit der Raupenkompakbagger auf der Lafette in seinen Arbeitsfunktionen, bis auf die Funktion des Planierschildes, bedient werden. In der Praxis bedeutet dies, daß der Raupenkompaktbagger, wenn er nur kurzzeitig im Bereich eines Einsatzortes benötigt wird, auf der Lafette verbleibt und von dort aus mit dem Raupenkompaktbagger gearbeitet wird. Hierbei kann die Lafette gegebenenfalls verfahren werden.

Im Rahmen der Erfindung kommt den hydraulischen Aggregaten der Lafette eine besondere Bedeutung zu, da diese über das Hydrauliksystem des Baggers beaufschlagt werden. Die jeweiligen Steuerkreise des Hydrauliksystems dienen im Regelfall der Steuerung der jeweiligen Komponenten des Baggers und werden nur dann, wenn der Bagger von der Lafette aufgenommen bzw. mittels dieser verfahren werden soll, mit den hydraulischen Aggregaten der Lafette verbunden.

Das Besondere der beiden zusammengeführten Steuerkreisbereiche des hydraulischen Steuerkreises des Fahrantriebes ist darin zu sehen, daß hierdurch die beiden separaten Ölkreisläufe der beiden Fahrmotoren für den unabhängigen Antrieb der beiden Ketten des Raupenkompaktbaggers zusammengeführt werden, mit der Konsequenz, daß nunmehr eine ausreichende Ölmenge bzw. ein erhöhter Volumenstrom an Öl am Fahrmotor der Lafette zur Verfügung steht. Die Lafette kann damit mit ausreichend hoher Geschwindigkeit verfahren werden, beispielsweise einer solchen von 20 km/h.

Es wird als vorteilhaft angesehen, die Lenkung der Lafette durch Umstecken des Steuerkreises des Planierschildes auf einen zweiseitig beaufschlagbaren Stellzylinder der Lenkachse zu bewerkstelligen.

Gemäß einer besonderen Weiterbildung der Erfindung ist vorgesehen, daß die Lafette eine Bremse aufweist, die als hydraulisch angesteuerte Negativbremse ausgelegt ist. Hierunter wird eine solche verstanden, die dann geschlossen ist und ihre Bremswirkung entfaltet, wenn kein oder nur ein geringer Hydraulikdruck an dieser ansteht. Bei einem Systemdruck von über 140 bar ist beispielsweise vorgesehen, daß die Bremse schließt, wenn ein Druck unter 3 bar anliegt. Hierdurch ist sichergestellt, daß beim Beaufschlagen des Fahrmotors der Lafette nicht gegen die Wirkung der geschlossenen Bremse gefahren werden muß. Eine Weiterbildung sieht in diesem Zusammenhang vor, daß die Bremse durch zwei einseitig beaufschlagbare Hydraulikzylinder geöffnet wird. Dies deshalb, weil bei Vorwärtsfahrt nur der eine Hydraulikzylinder druckbeaufschlagt ist, während bei Rückwärtsfahrt nur eine Druckbeaufschlagung des anderen Hydraulikzylinders erfolgt. So ist sichergestellt, daß immer ein Hydraulikzylinder die Bremse beaufschlagen kann.

Unter dem Aspekt der Gestaltung des Raupenkettenfahrzeuges als Raupenkompaktbagger sieht die Erfindung damit vor, Steuerungszustände von Bagger und Lafette weitgehend miteinander korrelieren zu lassen. Ein erster Bedienhebel im Bagger, der dem Zweck dient, diesen nach vorne und zurück zu verfahren, dient bei Ansteuerung der Lafette dem Zweck, diese vor und zurück zu verfahren. Ein zweiter Hebel, dessen Betätigung beim Bagger das Heben und Senken des Planierschildes bewirkt, bedingt bei Ansteuerung der Lafette dem Lenken der Lenkachse nach rechts oder links. Das Bremsen der Lafette erfolgt automatisch, wenn der Hydraulikdruck in den mit den einseitig beaufschlagbaren Hydraulikzylindern verbundenen Hydraulikleitungen reduziert wird.

Der mit dem Rampenkompaktbagger Arbeitende kann diesen ohne eine weitere Hilfsperson und ohne weitere maschinelle Hilfsmittel, wie Tieflader, Lastkraftwagen von einem Einsatzort zum anderen verbringen. Von der Lafette gelangt der Bagger über Auffahrrampen, die mit der Lafette verbindbar sind. Zweckmäßig sind dabei zwei Auffahrrampen vorgesehen, die beim Verfahren der Lafette, also dann, wenn sie nicht benötigt werden, zwischen die Ketten des Baggers auf das Fahrgestell der Lafette auflegbar und mit dieser verliersicher befestigbar sind. Um sicherzustellen, daß der Bagger beim Transport auf der Lafette sicher ruht, sollten Mittel zum Festlegen des Baggers auf der Lafette vorgesehen sein. Es wird als sinnvoll angesehen, wenn die Lafette eine Schildaufnahme zum Einführen des Planierschildes aufweist, sowie Spannelemente mit der Lafette und dem Fahrgestell des Baggers verbindbar sind, zum Spannen des Raupenkompaktbaggers mit dessen Planierschild in die Schildaufnahme. Die Spannelemente sollten im Bereich beider Ketten des Baggers außen an dessen Fahrgestell angreifen und auf die Schildaufnahme zu gerichtet sein. Im Bereich der Spannelemente sind zweckmäßig Führungselemente für die Ketten des Baggers vorgesehen, um zu gewährleisten, daß dieser auf der Lafette gegen seitliches Verrutschen gesichert ist.

Wegen des relativ geringen Gewichtes des Baggers, der sich in aller Regel zwischen einer und acht Tonnen bewegt, reicht es aus, wenn die Lafette mit zwei Achsen versehen ist, von denen eine lenkbar und eine antreibbar ist. Um den Lenkradius zu reduzieren, können aber auch beide Achsen lenkbar sein. Es ist ferner denkbar, die Lafette als Allradantrieb auszugestalten.

Die Lenkachse der Lafette ist zweckmäßig als Pendelachse ausgebildet und weist zusätzlich Stoßdämpfer auf, die zum Stabilisieren der Lenkachse am Fahrgestell der Lafette angreifen.

Weitere Merkmale der Erfindung sind in der Beschreibung der Figuren und den Figuren selbst dargestellt, wobei bemerkt wird, daß alle Einzelmerkmale und alle Kombinationen von Einzelmerkmalen erfindungswesentlich sind.

In den Figuren ist die Erfindung anhand eines Ausführungsbeispieles dargestellt, ohne hierauf beschränkt zu sein. Es stellt dar:
- Figur 1: in einer Gesamtansicht, von einer Seite, die Lafette mit darauf befindlichem Raupenkompaktbagger,
- Figur 2: eine Ansicht gemäß Figur 1, von einer anderen Seite, mit zwei auf die Lafette aufgelegten Auffahrrampen,
- Figur 3: eine Teilansicht von Lafette und Bagger, von vorne gesehen,
- Figur 4: eine Teilansicht von Lafette und Bagger, schräg von hinten gesehen,
- Figur 5: eine Teilansicht von Lafette und Bagger, schräg von vorne gesehen,
- Figur 6: eine Teilansicht von Lafette und Bagger, von hinten gesehen,
- Figur 7: eine Ansicht des Hydraulikanschlusses des Stellzylinders für die Lenkachse der Lafette, schräg von oben gesehen,
- Figur 8: den in Figur 7 gezeigten Anschluß mit Stellzylinder, von oben gesehen,
- Figur 9: eine Ansicht von Lafette und Bagger im Bereich von Fahrmotor und Bremse sowie deren Hydraulikanschlüsse, von hinten und schräg von oben gesehen,
- Figur 10: eine Detailansicht der in Figur 9 gezeigten Hydraulikanschlüsse, von hinten gesehen,
- Figur 11: den in Figur 9 gezeigten Fahrmotor mit seinen Hydraulikanschlüssen, sowie die Bremse des Hydraulikmotors, schräg von vorn gesehen und
- Figur 12: eine Draufsicht des in Figur 9 gezeigten Fahrmotors mit Bremse.

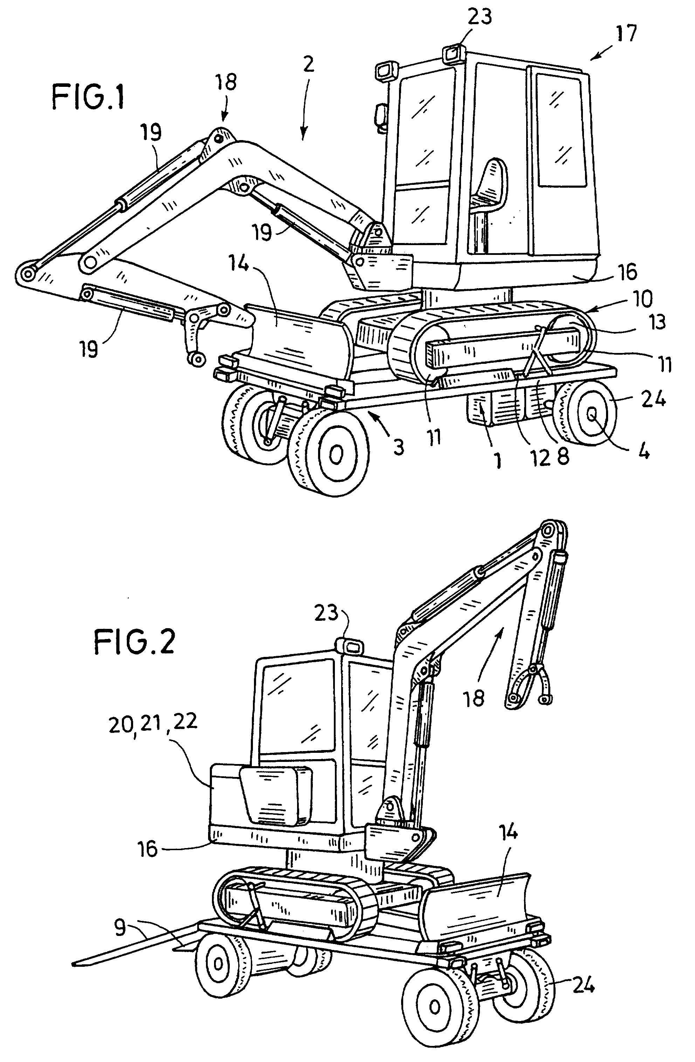

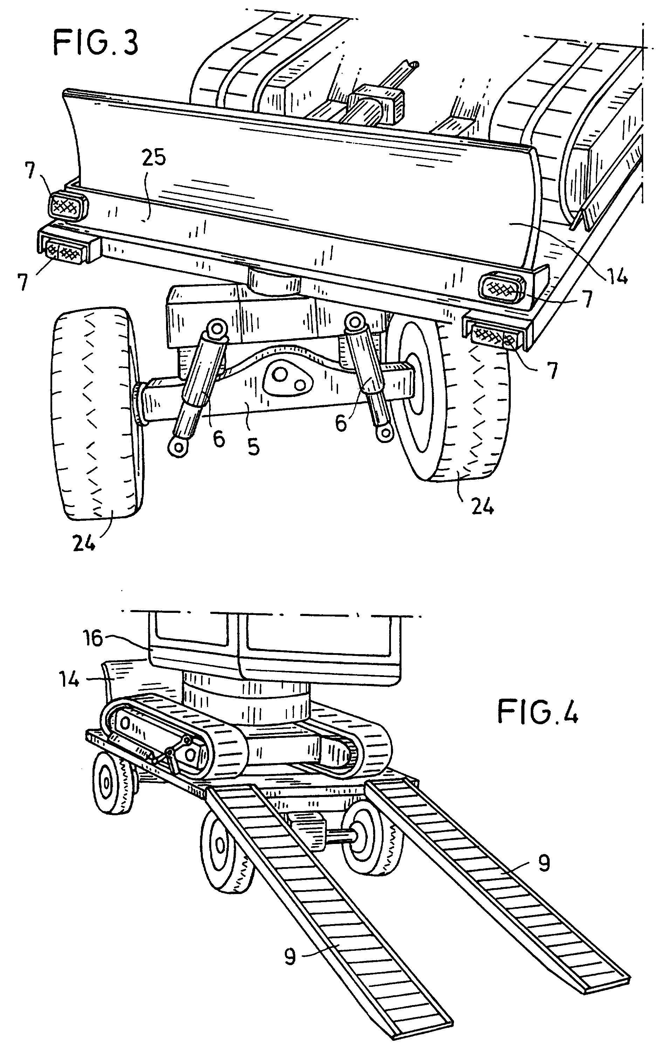

Die Figuren 1 und 2 zeigen den grundsätzlichen Aufbau von Lafette 1 und von dieser getragenem Raupenkompaktbagger 2. Die Lafette 1 weist ein Fahrgestell 3 sowie eine mit diesem verbundene, hintere, starre, angetriebene Achse 4 sowie eine vordere, lenkbare Achse 5 auf. Wie der Darstellung der Figur 3 zu entnehmen ist, ist die Lenkachse 5 als Pendelachse ausgebildet, mit zwei Stoßdämpfern 6, um Unebenheiten im Gelände ausgleichen zu können. Vorne und hinten sind am Fahrgestell drei Leuchtmittel 7 in Form von Blinkleuchten, Frontscheinwerfern, Rück- und Bremslichtern sowie Rückstrahlern befestigt. Auf den Laderahmen 8 des Fahrgestells 3, der der Aufnahme des Baggers 2 dient, sind beidseitig zwei Auffahrrampen 9 aufgelegt und in entsprechende Ausnehmungen des Laderahmens 8 gesichert eingesteckt.

Der Bagger 2 weist ein Fahrgestell 10 auf. In diesem sind beidseitig über Rollen 11 Gummiketten 12 gelagert. Die jeweils hintere Rolle 11 jeder Gummikette 12 wird mittels eines im Fahrgestell 10 gelagerten Fahrmotores 13 angetrieben. Vorne ist im Fahrgestell 10 des Baggers 2 ein Planierschild 14 mittels eines zweiseitig beaufschlagbaren Hydraulikzylinders 15 heb- und senkbar. Über einen nicht näher veranschaulichten Drehkranz ist ein Bodenrahmen 16 der Führerkabine 17 des Baggers im Fahrgestell 10 schwenkbar gelagert. Die Verschwenkung des Bodenrahmens 16 erfolgt mittels eines hydraulisch angetriebenen Schwenkmotors. Am Bodenrahmen ist ein Arm 18 angelenkt, der über Hydraulikzylinder 19 heb- und senkbar sowie ausfahrbar ist und dessen freies Ende der Aufnahme einer nicht gezeigten Baggerschaufel, eines Hydraulikhammers usw. dient. Der Bodenrahmen 16 nimmt im rückwärtigen Bereich der Fahrerkabine ferner einen Dieselmotor 20 und von diesem angetriebene Hydraulikpumpen 21 auf, die in unterschiedlichen Steuerkreisen bzw. Steuerkreisläufen die hydraulischen Antriebe (Fahrmotoren, Stellzylinder usw.) des Baggers mit Öl versorgen. Eine Lichtmaschine 22 erzeugt den im Zusammenhang mit dem Betrieb des Baggers notwendigen elektrischen Strom, beispielsweise für im oberen Bereich der Führerkabine 17 angeordnete Arbeitsscheinwerfer 23.

Nachdem der Bagger 2, bei arretierten Rädern 24 über die Auffahrrampen 9 auf die Lafette 1 gefahren ist, wird er dort verspannt. Das Planierschild 14 wird in eine Schildaufnahme 25 eingefahren und mit dem Laderahmen 8 verbundene Spannelemente 26 in das Fahrgestell 10 des Baggers 2 eingehängt und gespannt. Die Spannelemente 26 greifen auf beiden Seiten des Fahrgestelles 10 an. Dort sind auch Führungsschienen 27 für die beiden Ketten 12 des Baggers 10 vorgesehen, so daß der Bagger am seitlichen Verrutschen auf der Lafette bei deren Verfahren gehindert ist.

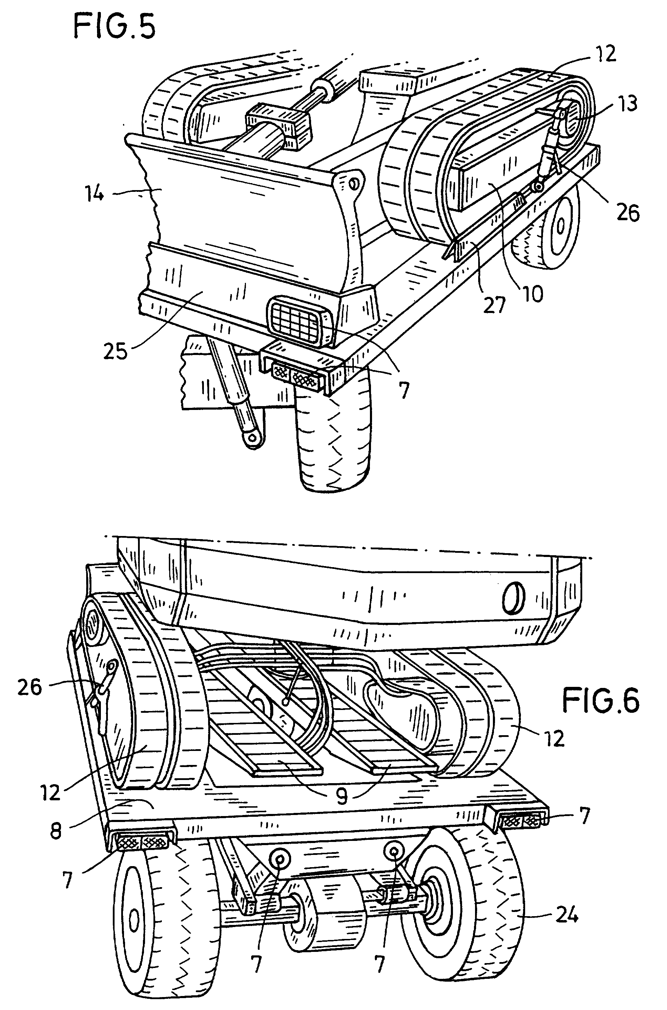

Beim Verfahren der Lafette 1 werden, wie in Figur 6 gezeigt ist, die Auffahrrampen 9 zwischen die beiden Ketten 12 auf die Lafette 1 gelegt und dort gesichert.

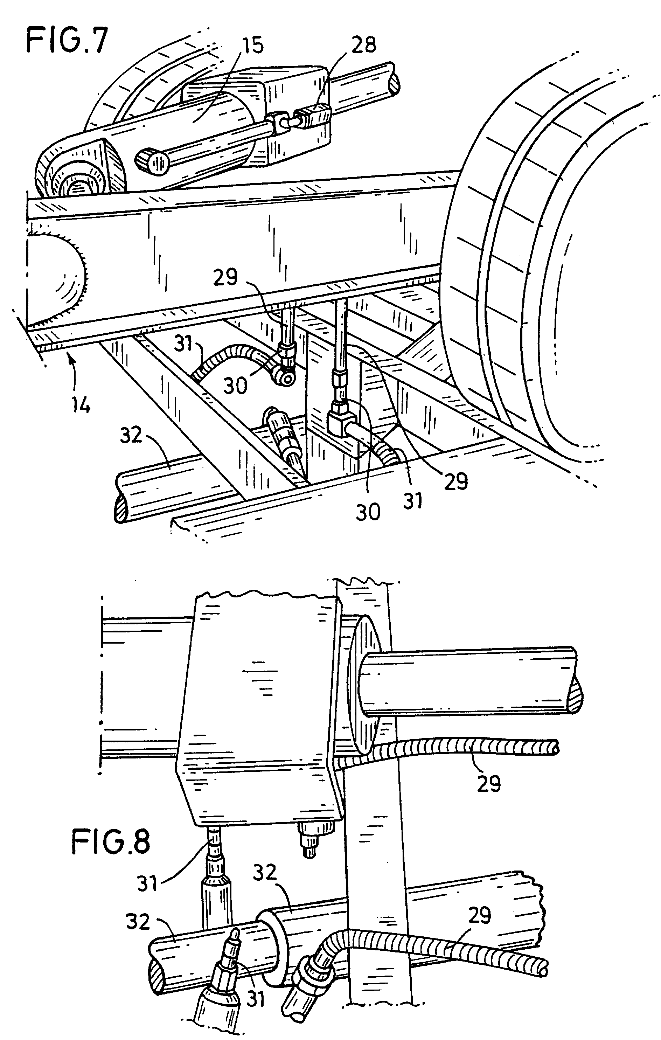

Die Figuren 7 und 8 zeigen den zweiseitig beaufschlagbaren Hydraulikzylinder 15 zum Heben und Senken des Planierschildes 14. Von den beiden Anschlußbuchsen des Hydraulikzylinders 15, von denen nur eine Anschlußbuchse 28 in der Figur 7 einsehbar ist, sind die Hydraulikleitungen 29 gelöst und mit Anschlußbuchsen 30, die mit dem Fahrgestell 10 des Baggers 2 verbunden sind, zusammengesteckt, wobei mit den Anschlußbuchsen 30 Hydraulikleitungen 31 verbunden sind, die mit den beiden Anschlüssen des zweiseitig beaufschlagbaren Hydraulikzylinders 32 für die Lenkachse 5 verbunden sind. Die Lenkung der Lafette 1 erfolgt damit durch Umstecken des Steuerkreises des Planierschildes 14 auf den zweiseitig beaufschlagbaren Stellzylinder 32 der Lenkachse 5.

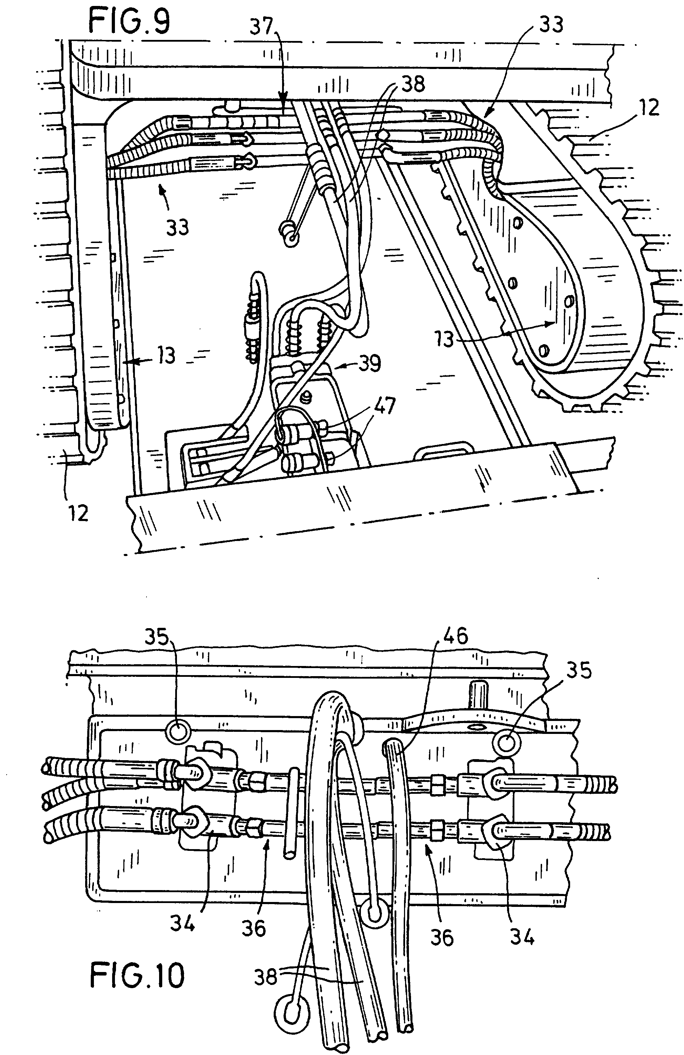

Die Figuren 9 bis 12 verdeutlichen die Elemente zum Antreiben der Lafette 1. Die Figuren 9 und 10 veranschaulichen insbesondere im rechten und linken Bereich die diversen Hydraulikleitungen 33 zum Ansteuern der beiden hydraulischen Fahrmotoren 13 des Baggers 2. Die beiden Fahrmotoren 13 bilden zwei separate Steuerkreisbereiche, um so, zum Drehen des Baggers 2 dessen Gummiketten 12 mit unterschiedlichen Geschwindigkeiten oder gar mit unterschiedlichen Drehrichtungen antreiben zu können. Wie insbesondere der Darstellung der Figur 10 zu entnehmen ist, weist jeder Steuerkreisbereich einen Steuerschieber 34 mit Stellhebel 35 auf, der in einer ersten Stellung den Zufluß von Hydrauliköl zum Fahrmotor 13 und von diesen weg freigibt und in einer zweiten Stellung verschließt. Nur in dieser zweiten Stellung gelangt Hydrauliköl in die die beiden Steuerschieber 34 verbindenden Verbindungsleitungen 36 und von diesen über ein zentrales Modul 37 und entgegengesetzt durchströmte Hydraulikleitungen 38 zum Fahrmotor 39 der Antriebsachse 4 der Lafette 1. Die Antriebsachse 4 bildet eine übliche Baueinheit mit Getriebe 40 und Bremse 41, wobei der hydraulische Fahrmotor 39 am Getriebe 40 angeflanscht ist. In den Steuerkreis für den Fahrmotor 39 ist die Ansteuerung der als Negativbremse ausgebildeten Bremse 41 integriert. Zwei Steuerleitungen 42 beaufschlagen einseitig Stellzylinder 43, wobei jeder Stellzylinder einerseits an einem Bremshebel 44 angreift und andererseits in einem Lagerteil 45 gehalten ist, das im Getriebe 40 gehalten ist.

Eine weitere Hydraulikleitung 46 für Lecköl ist schließlich mit dem Fahrmotor 39 verbunden.

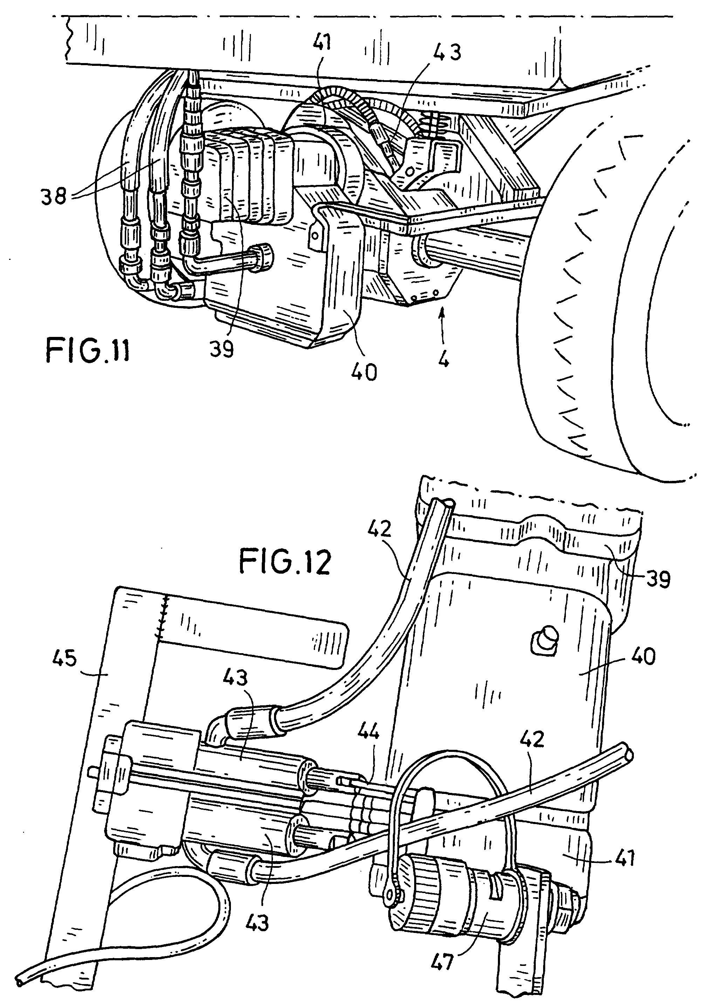

Der Fahrantrieb der Lafette 1 erfolgt damit durch Umstecken des Steuerkreises der beiden hydraulischen Fahrmotoren 13 des Baggers 2 auf den hydraulischen Fahrmotor 39 der Lafette 1. Diverse Blindanschlüsse, wie beispielsweise in Figur 12 mit der Bezugsziffer 47 verdeutlicht, dienen dem Verbinden der Hydraulikleitungen, wenn diese entsprechend dem Betriebszustand Lafettenbetrieb bzw. Baggerbetrieb nicht benötigt werden, die Hydraulikleitungen werden dann einfach auf die Blindanschlüsse aufgesteckt.

Nicht gezeigt ist in den Figuren eine am Bodenrahmen 16 des Baggers 2 angebrachte elektrische Anschlußbuchse sowie eine am Laderahmen 8 der Lafette 1 angebrachte elektrische Anschlußbuchse für die Leuchtmittel 7.

Nachdem der Bagger 2 auf die Lafette 1 aufgefahren ist, wird er als der Spannelemente 26 gegen die Schildaufnahme 25 verspannt. Die Auffahrrampen 9 werden von der Lafette 1 gelöst und mit deren Fahrgestell 3 verbunden. Die elektrischen Buchsen werden mittels einer Steckleitung miteinander verbunden, so daß die Leuchtmittel 7 aus der Fahrerkabine 17 heraus bedient werden können. Der Steuerkreis des Planierschildes 14 wird auf den Stellzylinder der Lenkachse 5 umgesteckt. Der Steuerkreis der beiden Fahrmotoren 13 des Baggers 2 wird auf den Fahrmotor 39 der Lafette umgesteckt und die beiden Stellhebel 35 umgelegt, so daß über das Hydrauliksystem, das heißt die vom Dieselmotor 20 angetriebenen Hydraulikpumpen 21 statt der beiden Fahrmotoren 13 der lafettenseitige Fahrmotor 39 angetrieben und dabei die Wirkung der Bremse 41 aufgehoben wird. Zum Entladen des Baggers 2 von der Lafette 1 werden die vorstehenden Arbeitsabläufe in umgekehrter Reihenfolge durchgeführt.

## Patentansprüche

1. Lenkbare Lafette (1) mit Rädern (24) zur Aufnahme eines Raupenkettenfahrzeuges (2), wobei das Antriebssystem der Ketten (12) des Raupenkettenfahrzeuges (2) mit einer Antriebsachse (4) der Lafette (1) verbindbar ist, das Raupenkettenfahrzeug (2) ein Hydrauliksystem aufweist, das mit der hydraulisch antreibbaren Antriebsachse (4) der Lafette und einem hydraulischen Stellglied der Lenkung der Lafette (1) koppelbar ist, wobei der Fahrantrieb der Lafette (1) durch Umstecken eines Steuerkreises einer oder mehrerer hydraulischer Fahrmotoren (13) des Raupenkettenfahrzeuges (2) auf einen oder mehrere hydraulische Fahrmotoren (39) der Lafette (1) bewerkstelligt wird, und die Lenkung der Lafette (1) durch Umstecken eines hydraulischen Steuerkreises des Raupenkettenfahrzeuges (2) auf das hydraulische Stellglied der Lenkung erfolgt, **dadurch gekennzeichnet**, daß das Raupenkettenfahrzeug (2) als Raupenkompaktbagger (2) mit Planierschild (14) ausgebildet ist und die Lenkung der Lafette (1) durch Umstecken des hydraulischen Steuerkreises des Planierschildes (14) auf das hydraulische Stellglied der Lenkung erfolgt, wobei der hydraulische Steuerkreis des Fahrantriebes zwei Steuerkreisbereiche (34, 34) aufweist, mit denen zwei Fahrmotoren (13, 13) steuerbar sind, die dem unabhängigen Antrieb zweier Ketten (12, 12) des Raupenkompaktbaggers (2) dienen, wobei im Fahrzustand der Lafette (1) die beiden Fahrmotoren (13, 13) entkoppelt und die zusammengeführten Steuerkreisbereiche (37) mit dem Fahrmotor (39) der Lafette (1) gekoppelt sind.

2. Lafette nach Anspruch 1, **dadurch gekennzeichnet**, daß die Lenkung der Lafette (1) durch Umstecken des Steuerkreises des Planierschildes (14) des Raumpenkompaktbaggers (2) auf einen zweiseitig beaufschlagbaren Stellzylinder der Lenkachse (5) erfolgt.

3. Lafette nach Anspruch 1 oder 2, **dadurch gekennzeichnet**, daß eine Bremse (41) durch zwei einseitig beaufschlagbare Hydraulikzylinder geöffnet wird.

4. Lafette nach einem der Ansprüche 1 bis 3, **dadurch gekennzeichnet**, daß eine elektrische Steckverbindung zwischen dem Raupenkompaktbagger (2) und der Lafette (1) vorgesehen ist und die Lafette (1) die im Straßenverkehr notwendigen Leuchtmittel (7) aufweist.

5. Lafette nach einem der Ansprüche 1 bis 4, **dadurch gekennzeichnet**, daß die Lenkachse (5) als Pendelachse ausgebildet ist, an der Stoßdämpfer (6) zum Stabilisieren der Lenkachse zum Fahrgestell (3) der Lafette (1) angreifen.

6. Lafette nach einem der Ansprüche 1 bis 5, **dadurch gekennzeichnet**, daß Mittel (25, 26) zum Festlegen des Raupenkompaktbaggers (2) auf der Lafette (1) vorgesehen sind.

7. Lafette nach Anspruch 6, **dadurch gekennzeichnet**, daß sie eine Schildaufnahme (25) zum Einführen des Planierschildes (14) aufweist, sowie Spannelemente (26) mit der Lafette (1) und dem Fahrgestell des Raupenkompaktbaggers (2) verbindbar sind, zum Spannen des Raupenkompaktbaggers (2) mit dessen Planierschild (14) in die Schildaufnahme (25).

8. Lafette nach einem der Ansprüche 1 bis 7, **dadurch gekennzeichnet**, daß sie im Bereich ihrer beiden Längsseiten Führungselemente (27) für die Ketten (12) des Raupenkompaktbaggers (2) aufweist.

9. Lafette nach einem der Ansprüche 1 bis 8, **dadurch gekennzeichnet**, daß zwei Auffahrrampen (9) vorgesehen sind, die zwischen die Ketten (12) des Raupenkompaktbaggers (2) auf die Lafette (1) auflegbar und mit dieser befestigbar sind.

## Claims

1. Steerable trailer (1) on wheels (24) for receiving a tracked vehicle (2), and the drive system of the chains (12) of the tracked vehicle (2) is connectable to a drive axle (4) of the trailer (2), the tracked vehicle (2) comprises a hydraulics system which can be coupled to the hydraulically driven drive axle (4) of the trailer and a hydraulic control member of the steering of the trailer (1), and the drive of the trailer (1) is realised by replugging a control circuit of one or more hydraulic drive motors (13) of the tracked vehicle (2) onto one or more hydraulic drive motors (39) of the trailer (1), and the steering of the trailer (1) is carried out by replugging a hydraulic control circuit of the tracked vehicle (2) onto the hydraulic control member of the steering, **characterised in that** the tracked vehicle (2) is designed as a tracked compact excavator (2) with a planing shield (14), and steering of the trailer (1) is carried out by replugging the hydraulic control circuit of the planing shield (14) onto the hydraulic control member of the steering, and the hydraulic control circuit of the drive comprises two control circuit areas (34, 34) by means of which two drive motors (13, 13) can be controlled which serve an independent drive of two chains (12, 12) of the tracked compact excavator (2), and in the driving state of the trailer (1) both drive motors (13, 13) are uncoupled and the joined control circuit areas (37) are coupled to the drive motor (39) of the trailer (1).

2. Trailer according to Claim 1, **characterised in that** steering of the trailer (1) is carried out by replugging the control circuit of the planing shield (14) of the tracked compact excavator (2) onto a twosidedly loadable control cylinder of the steering axle (5).

3. Trailer according to Claim 1 or 2, **characterised in that** a brake (41) is opened by two singlesidedly loadable hydraulics cylinders.

4. Trailer according to one of Claims 1 to 3, **characterised in that** an electrical plug connection between the tracked compact excavator (2) and the trailer (1) is provided, and the trailer (1) is fitted with illuminations (7) required for road use.

5. Trailer according to one of Claims 1 to 4, **characterised in that** the steering axle (5) is designed as a pendulum axle which is engaged by shock absorbers (6) for the purpose of stabilising the steering axle relative to the chassis (3) of the trailer (1).

6. Trailer according to one of Claims 1 to 5, **characterised in that** means (25, 26) are provided for securing the tracked compact excavator (2) onto the trailer (1).

7. Trailer according to Claim 6, **characterised in that** it comprises a shield receptacle (25) for receiving the planing shield (14) as well as clamping elements (26) which are connectable to the trailer (1) and the chassis of the tracked compact excavator (23) for the purpose of clamping the tracked compact excavator (2) with its planing shield (14) into the shield receptacle.

8. Trailer according to one of Claims 1 to 7, **characterised in that** it comprises in the area of its two longitudinal sides guide elements (27) for the chains (12) of the tracked compact excavator (2).

9. Trailer according to one of Claims 1 to 8, **characterised in that** two drive-up ramps (9) are provided which are placeable onto the trailer (1) between the chains (12) of the tracked compact excavator (2) and securable thereto.

## Revendications

1. Support dirigeable (1) comprenant des roues (24) pour le transport d'un véhicule à chenilles, dans lequel le système d'entraînement des chenilles (12) du véhicule à chenilles (2) peut être relié à un essieu d'entraînement (4) du support (1), le véhicule à chenilles (2) présentant un système hydraulique qui peut être couplé avec l'essieu d'entraînement (4) du support apte à être entraîné par voie hydraulique et avec un organe de commande hydraulique de la direction du support (1), dans lequel l'entraînement de déplacement du support (1) est réalisé en faisant passer un circuit de commande d'un ou de plusieurs moteurs de roulement hydrauliques (13) du véhicule à chenilles (2) sur un ou plusieurs moteurs de roulement hydrauliques (39) du support (1), la direction du support (1) étant réalisée en faisant passer un circuit de commande hydraulique du véhicule à chenilles (2) sur l'organe de commande hydraulique de la direction, caractérisé en ce que le véhicule à chenilles (2) est réalisé sous la forme d'un excavateur compact à chenilles (2) comprenant une lame niveleuse (14) et la direction du support (1) est réalisée en faisant passer le circuit de commande hydraulique de la lame (14) sur l'organe de commande hydraulique de la direction, dans lequel le circuit de commande hydraulique de l'entraînement de déplacement présente deux zones de circuit de commande (34, 34) avec lesquelles deux moteurs de roulements (13, 13) peuvent être commandés, ceux-ci servant l'entraînement indépendant de deux chenilles (12, 12) de l'excavateur compact à chenilles (2), dans lequel, dans la condition de roulement du support (1), les deux moteurs de déplacement (13, 13) sont découplés et les zones de circuit de commande réunies (37) sont couplées au moteur de roulement (39) du support (1).

2. Support selon la revendication 1, caractérisé en ce que la direction du support (1) a lieu en faisant passer le circuit de commande de la lame niveleuse (14) de l'excavateur compact à chenilles (2) sur un vérin de réglage de l'essieu de direction (5) qui peut être sollicité des deux côtés.

3. Support selon les revendications 1 ou 2, caractérisé en ce qu'un frein (41) est ouvert par deux cylindres hydrauliques aptes à être sollicités d'un seul côté.

4. Support selon l'une quelconque des revendications 1 à 3, caractérisé en ce qu'on prévoit un raccord électrique mâle et femelle entre l'excavateur compact à chenilles (2) et le support (1) présente les moyens d'éclairage (7) requis dans la circulation sur route.

5. Support selon l'une quelconque des revendications 1 à 4, caractérisé en ce que l'essieu de direction (5) est réalisé sous la forme d'un essieu à suspension indépendant des roues, sur lesquels agissent des absorbeurs de chocs (6) pour stabiliser l'essieu de direction par rapport au châssis (3) du support (1).

6. Support selon l'une quelconque des revendications 1 à 5, en ce qu'on prévoit des moyens (25, 26) pour fixer l'excavateur compact à chenilles (2) sur le support (1).

7. Support selon l'une quelconque des revendications 1 à 6, caractérisé en ce qu'il présente un logement de lame (25) pour que vienne s'y insérer la lame niveleuses (14) ainsi que des éléments de serrage (26) qui peuvent être reliés au support (1) et au châssis de l'excavateur compact à chenilles (2) pour serrer l'excavateur compact à chenilles (2) avec sa lame niveleuse (14) dans le logement de lame (25).

8. Support selon l'une quelconque des revendications 1 à 7, caractérisé en ce qu'il présente dans la zone de ses deux côtés longitudinaux, des éléments de guidage (27) pour les chenilles (12) de l'excavateur compact à chenilles (2).

9. Support selon l'une quelconque des revendications 1 à 8, caractérisé en ce qu'on prévoit deux rampes de montée (9) qui peuvent venir se disposer entre les chenilles (12) de l'excavateur compact à chenilles (2) sur le support (1) et qui peuvent être fixées à ce dernier.
